# EUROPÄISCHE PATENTSCHRIFT

(11) **EP 2 760 691 B1**
(45) Veröffentlichungstag und Bekanntmachung des Hinweises auf die Patenterteilung: **27.11.2019**
(21) Anmeldenummer: 12766281.5
(22) Anmeldetag: 21.09.2012
(51) Int. Cl.: B60W 20/40, B60K 6/30, B60K 6/52, B60K 6/547, B60K 6/26, B60K 6/10, B60K 6/48

(54) **HYBRIDFAHRZEUG**
HYBRID VEHICLE
VÉHICULE HYBRIDE

(30) Priorität: 29.09.2011 DE 102011115281
(43) Veröffentlichungstag der Anmeldung: 06.08.2014
(73) Patentinhaber: Audi AG, 85045 Ingolstadt (DE)
(72) Erfinder: DAWIDZIAK, Johannes, 97950 Grossrinderfeld (DE); CLEMENT, Steffen, 74172 Neckarsulm (DE); SCHIEFER, Markus, 74348 Lauffen (DE)
(74) Vertreter: Wohnert, Dietmar
(86) Internationale Anmeldenummer: PCT/EP2012/003952
(87) Internationale Veröffentlichungsnummer: WO 2013/045061

(56) Entgegenhaltungen:
- DE-A1- 2 436 546
- DE-A1-102007 033 575
- US-A- 4 309 620
- US-A1- 2010 184 549
- US-A1- 2011 106 359

## Beschreibung

Die Erfindung betrifft ein Hybridfahrzeug, umfassend einen Verbrennungsmotor mit einer Antriebswelle zum Antreiben der Räder wenigstens einer Achse, wenigstens einer elektrischen Maschine zum Antreiben der Räder dieser oder wenigstens einer weiteren Achse, wobei die wenigstens eine elektrische Maschine bei einem Bremsvorgang als Generator und bei einem Beschleunigungsvorgang als Motor betreibbar ist, sowie eine mit der wenigstens einen elektrischen Maschine gekoppelte weitere elektrische Maschine mit einem einen Rotor aufweisenden Schwungradspeicher, der bei einem Bremsvorgang aufladbar und bei einem Beschleunigungsvorgang entladbar ist, wobei der Rotor über wenigstens eine schaltbare Kupplung mechanisch mit der Antriebswelle der wenigstens einen vom Verbrennungsmotor antreibbaren Achse koppelbar ist.

Der Einsatz von Schwungrädern bei Fahrzeugen ist bereits seit langem bekannt.

DE 10 2007 033 575 A1 offenbart einen Antriebsstrang für ein Hybridfahrzeug, bei dem ein elektrischer Energiespeicher als Schwungradmassenspeicher ausgeführt ist, der über eine Kupplung mit einem Verbrennungsmotor des Hybridfahrzeugs koppelbar ist.

Weitere Fahrzeuge bzw. Fahrzeugantriebe, bei denen Schwungräder zur Speicherung von Energie genutzt werden, sind in US 4 309 620 A, DE 24 36 546 A1, US 2011/106359 A1 sowie US 2010/184549 A1 offenbart.

In der DE 639 717 A wird ein Schwungradspeicher für Fahrzeuge vorgeschlagen, bei dem zwischen dem Schwungrad und dem Antriebsstrang eines Fahrzeugs ein schaltbares Getriebe angeordnet ist. Anstelle eines mechanischen Stufengetriebes kann auch ein eine elektrische Maschine umfassendes elektrisches Getriebe eingesetzt werden.

Aus der AT 147860 B ist ein Schwungradspeicher für Kraftfahrzeuge bekannt. Ein Verbrennungsmotor treibt als Hauptantrieb eine Achse an, der Schwungradspeicher treibt eine oder mehrere zusätzliche Antriebsachsen an.

In der DE 10 2010 007 632 A1 wird ein Hybridfahrzeug vorgeschlagen, das einen die Hinterachse antreibenden Verbrennungsmotor und zwei elektrische Maschinen an der Vorderachse aufweist. Die elektrischen Maschinen werden bei einem Bremsvorgang als Generator betrieben, um Bewegungsenergie zurückzugewinnen. Die im Rahmen der Rekuperation gewonnene Energie wird einem als Energiespeicher dienenden Schwungrad zugeführt. Dazu wird von den an der Vorderachse angeordneten elektrischen Maschinen Strom erzeugt, der einer dritten elektrischen Maschine, die in dem Schwungradspeicher angeordnet ist, zugeführt wird, um einen Rotor des Schwungradspeichers in Bewegung zu versetzen. Dieser Rotor kann Drehzahlen bis zu 40.000 1/min erreichen. Der bei dem Hybridfahrzeug vorgesehene Rotor dient als mechanischer Energiespeicher, so dass keine elektrochemische Speicherbatterie wie bei anderen herkömmlichen Hybridfahrzeugen erforderlich ist. Im Anschluss an einen Bremsvorgang steht die in Form von Bewegungsenergie gespeicherte wiedergewonnene Energie für einen Beschleunigungsvorgang zur Verfügung. Dazu wird die dritte elektrische Maschine des Schwungradspeichers als Generator betrieben, wodurch unter Verlangsamung des Rotors elektrische Energie erzeugt wird, die wiederum der ersten und der zweiten elektrischen Maschine an der Vorderachse zugeführt wird. Diese elektrische Energie wirkt als zusätzliche Antriebsenergie, die den die Hinterachse antreibenden Verbrennungsmotor unterstützt.

Um den Wirkungsgrad und die Regelbarkeit zu verbessern, wird bei Hybridfahrzeugen üblicherweise ein elektrisches Getriebe mit wenigstens einer elektrischen Maschine oder ein CVT-Getriebe (continuously variable transmission) eingesetzt. Sowohl das elektrische Getriebe als auch das CVT führen bei einer hohen übertragenen Leistung jedoch zu einem hohen Systemgewicht. Daher kann lediglich ein überschaubarer Anteil der tatsächlich auftretenden Bremsenergie in Bewegungsenergie umgewandelt werden. Der größte Teil der Bremsenergie geht nach wie vor ungenutzt als Wärme verloren. Viele Fahrzeuge wie Linienbusse, Müllfahrzeuge oder Lieferfahrzeuge werden jedoch so betrieben, dass sie häufig abgebremst und wieder beschleunigt werden. Dasselbe gilt für Motorsportfahrzeuge sowie generell für Fahrzeuge im Stadtverkehr.

Der Erfindung liegt daher die Aufgabe zugrunde, ein Hybridfahrzeug anzugeben, das die Rekuperation eines größeren Anteils der Bremsenergie ermöglicht.

Zur Lösung dieser Aufgabe ist bei einem Hybridfahrzeug der eingangs genannten Art erfindungsgemäß vorgesehen, dass der Schwungradspeicher über die als Reibungskupplung ausgebildete schaltbare Kupplung selektiv mit einer Antriebswelle eines automatischen Getriebes verbindbar ist.

Der Erfindung liegt die Erkenntnis zugrunde, dass die rekuperierte Bremsenergie erhöht werden kann, indem der Rotor des Schwungradspeichers zusätzlich zu der von der wenigstens einen elektrischen Maschine gelieferten Energie mechanisch mit der Antriebswelle der vom Verbrennungsmotor angetriebenen Achse koppelbar ist. Auf diese Weise wird ein herkömmliches Hybridfahrzeug dahingehend verbessert, dass ein wesentlich größerer Teil der Bremsenergie wiedergewonnen werden kann. Bei herkömmlichen Hybridfahrzeugen, bei denen elektrische Maschinen während des Bremsvorgangs als Generator betrieben werden können, entspricht die rekuperierbare Energie der von den beiden elektrischen Maschinen generatorisch erzeugbaren Strommenge, diese Energie ist jedoch wesentlich kleiner als die insgesamt auftretende Bremsenergie und eine Vergrößerung der wiedergewinnbaren Energiemenge ist aus Gewichtsgründen nicht zweckmäßig. Dementsprechend entspricht bei herkömmlichen Hybridfahrzeugen die zur Beschleunigung zur Verfügung stehende Energie näherungsweise der beim Bremsvorgang rekuperierten Energie, abgesehen von Umwandlungsverlusten. Demgegenüber kann mit dem erfindungsgemäßen Hybridfahrzeug ein höherer Anteil der Bremsenergie rekuperiert werden, indem der Schwungradspeicher zusätzlich mechanisch über die mit dem Verbrennungsmotor verbundene Antriebswelle beschleunigt wird.

Bei dem erfindungsgemäßen Hybridfahrzeug ist vorgesehen, dass die schaltbare Kupplung als Reibungskupplung ausgebildet ist. Die Reibungskupplung entspricht grundsätzlich einer Reibungskupplung, die bei Kraftfahrzeugen mit Schaltgetriebe verwendet wird. Durch die schaltbare Kupplung kann die mit dem Verbrennungsmotor verbundene Antriebswelle während eines Bremsvorgangs mit dem Schwungradspeicher verbunden werden, um diesen zusätzlich aufzuladen.

Bei dem erfindungsgemäßen Hybridfahrzeug wird es besonders bevorzugt, dass zwischen der Reibungskupplung und der Antriebswelle der vom Verbrennungsmotor antreibbaren Achse, die mit dem Verbrennungsmotor verbunden ist, ein schaltbares Getriebe angeordnet ist. Vorzugsweise handelt es sich dabei um ein ohnehin vorgesehenes Getriebe zwischen dem Verbrennungsmotor und der angetriebenen Achse.

Ein besonders guter Wirkungsgrad ergibt sich, wenn der Schwungradspeicher des erfindungsgemäßen Hybridfahrzeugs in einem abgedichteten oder abdichtbaren Gehäuse angeordnet ist. Durch die Abdichtung werden Strömungsverluste vermieden, die ansonsten im Hinblick auf die hohen Drehgeschwindigkeiten des Rotors entstehen könnten.

Um den Wirkungsgrad des erfindungsgemäßen Hybridfahrzeugs weiter zu verbessern, kann es vorgesehen sein, dass das Gehäuse, in dem das Schwungrad aufgenommen ist, mittels einer Vakuumpumpe evakuierbar ist. Die steuerbare Vakuumpumpe bietet die Möglichkeit, den Schwungradspeicher luftdicht abzuschließen, wodurch die im Rotor gespeicherte Bewegungsenergie länger aufrechterhalten werden kann, ansonsten würde die Ventilation von Luft zu Strömungsverlusten führen.

Eine noch höhere Effizienz lässt sich erreichen, wenn der Schwungradspeicher eine interne Kupplung umfasst. Dadurch können im aufgeladenen Zustand Bauteile abgekoppelt werden, die dann nicht benötigt werden. Dabei kann es sich um elektrische Komponenten der weiteren, insbesondere einer dritten elektrischen Maschine handeln, die lediglich im motorischen Betrieb benötigt werden, nicht jedoch beim Aufladen des Schwungrads. In diesem Zusammenhang ist es besonders günstig, wenn eine in das Gehäuse des Schwungrads mündende Antriebeswelle mittels einer Dichtung abdichtbar ist. Vorzugsweise ist die Dichtung konusförmig und wird durch die Betätigung der internen Kupplung wirksam. Das Gehäuse wird auf diese Weise nur dann abgedichtet, wenn die Kupplung geöffnet ist. Die erfindungsgemäß vorgesehene konusförmige Dichtung ersetzt einen verschleißbehafteten Radialwellendichtring.

Um eine Anpassung der Motordrehzahl an die Drehzahl des Schwungrads (vor einer Übersetzung) zu erzielen, kann bei dem erfindungsgemäßen Hybridfahrzeug vorgesehen sein, dass es eine Steuerungseinrichtung aufweist. Mittels der Steuerungseinrichtung wird das Getriebe stufenweise geschaltet, d. h. wenn die Motordrehzahl während eines Bremsvorgangs auf einen bestimmten Wert abgesunken ist, wird von der Steuerungseinrichtung in einen kleineren Gang geschaltet, um die Motordrehzahl zu erhöhen und an die Drehzahl des Schwungrads vor der Übersetzung anzupassen. Das Getriebe ist ein automatisches Getriebe, so dass die Schaltvorgänge ohne den Eingriff eines Benutzers erfolgen können.

Die weitere, insbesondere die dritte elektrische Maschine kann als Bestandteil des Schwungradspeichers den Rotor und einen Stator umfassen, wobei entweder der Rotor oder der Stator Permanentmagnete aufweist. Die jeweils andere Komponente weist Feldwicklungen auf, in die durch die Rotation eine Spannung induziert wird.

Bei dem erfindungsgemäßen Hybridfahrzeug kann die schaltbare Reibungskupplung mit einem Antiblockiersystem ausgerüstet sein. Dadurch wird eine zuverlässige Übertragung des Drehmoments von der Antriebswelle auf den Schwungradspeicher sichergestellt.

Zusätzlich kann das erfindungsgemäße Hybridfahrzeug einen Energiewandler umfassen, um bei einem Bremsvorgang kinetische Energie von der mit dem Verbrennungsmotor gekoppelten Antriebswelle in pneumatische, hydraulische oder elektrische Energie umzuwandeln und auf diese Weise dem Schwundradspeicher zuzuführen. Beispielsweise kann die kinetische Energie zum Aufladen eines Druckluftspeichers benutzt werden, durch den eine Turbine angetrieben werden kann, die mit dem Schwungrad gekoppelt ist. Auf diese Weise kann das Schwungrad mittels pneumatischer Energie beschleunigt werden. Der zur Erzeugung pneumatischer, hydraulischer oder elektrischer Energie ausgebildete Schwungradspeicher ist vorzugsweise zusätzlich zu dem mechanischen Antrieb vorgesehen, es sind jedoch auch Ausführungen denkbar, bei denen anstelle einer mechanischen Kopplung und Energieübertragung die Beschleunigung des Schwungrads mittels pneumatischer, hydraulischer oder elektrischer Energie erfolgt. Der Energiewandler wandelt somit die kinetische Energie der Antriebswelle um, die umgewandelte Energie wird zur Beschleunigung des Rotors während eines Bremsvorgangs benutzt.

Im Hinblick auf die hohen von einer Antriebswelle übertragenen Leistungen kann es bei dem erfindungsgemäßen Hybridfahrzeug vorgesehen sein, dass die Reibungskupplung mit einem Wärmetauscher gekoppelt ist. Dieser Wärmetauscher dient zum Abführen von in der Kupplung erzeugter Wärme. Primär wird diese Wärme durch den Schlupf der Kupplung erzeugt, wenn Drehzahldifferenzen zwischen beiden Kupplungsseiten ausgeglichen werden. Vorzugsweise ist der Wärmetauscher als Öl/Kühlwasser-Wärmetauscher ausgebildet. Der Wärmetauscher kann in den Kühlkreislauf des Verbrennungsmotors integriert sein, die zusätzliche Belastung durch die Kühlung der Reibungskupplung ist unproblematisch, da der Motor während eines Bremsvorgangs den Kühlkreislauf weniger stark belastet.

Weitere Vorteile und Einzelheiten der Erfindung werden anhand eines Ausführungsbeispiels unter Bezugnahme auf die Zeichnungen erläutert. Die Zeichnungen sind schematische Darstellungen und zeigen:
- Fig. 1: die wesentlichen Komponenten eines erfindungsgemäßen Hybridfahrzeugs; und
- Fig. 2: ein Diagramm, bei dem die Drehzahlen des Schwungrads und der Antriebswelle sowie die Fahrzeuggeschwindigkeit während eines Bremsvorgangs über der Zeit aufgetragen sind.

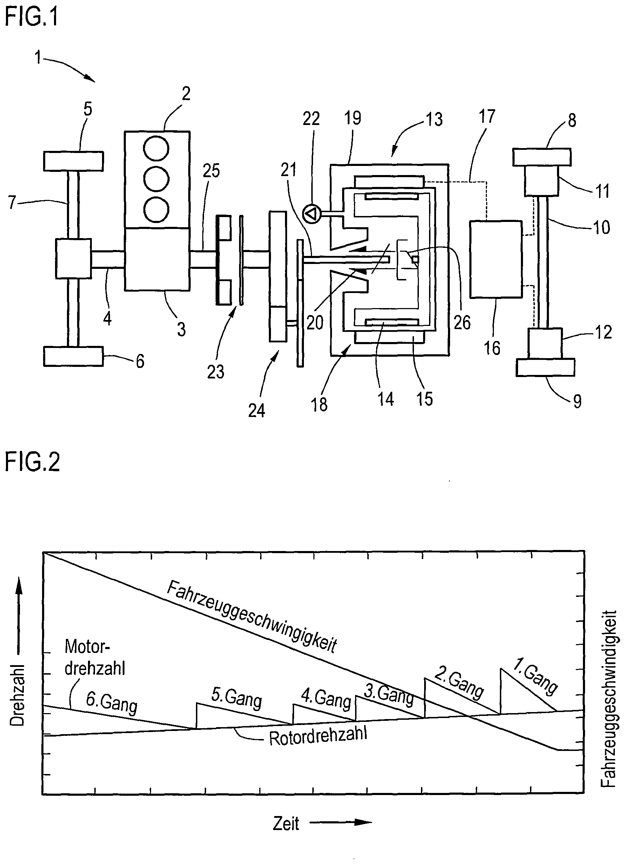

Das in Fig. 1 zeigte Hybridfahrzeug 1 umfasst einen Verbrennungsmotor 2, der mit einem automatischen Getriebe 3 verbunden ist. Über eine mit dem automatischen Getriebe 3 verbundene Antriebswelle 4 werden Räder 5, 6 einer ersten Achse 7 angetrieben. Räder 8, 9 einer zweiten Achse 10 werden durch elektrische Maschinen 11, 12 angetrieben. Bei einem Bremsvorgang sind die elektrischen Maschinen 11, 12 als Generator betreibbar. Durch die sich drehenden Räder 8, 9 wird beim generatorischen Betrieb eine Spannung erzeugt, der erzeugte elektrische Strom dient zum Aufladen eines Schwungradspeichers 13. Der Schwungradspeicher 13 umfasst einen Rotor 14 und einen Stator 15. Gemeinsam bilden Rotor 14 und Stator 15 eine elektrische Maschine 18, die entweder als Generator oder als Motor betreibbar ist.

Bei einem Bremsvorgang steuert eine Leistungselektronik 16 die elektrischen Maschinen 11, 12 der zweiten Achse 10. Die während des Bremsvorgangs erzeugte elektrische Energie wird über eine Leitung 17 der elektrischen Maschine 18 des Schwungradspeichers 13 zugeführt, wodurch der Rotor 14 beschleunigt wird.

Der Schwungradspeicher 13 ist in einem Gehäuse 19 angeordnet, das mittels einer Dichtung 20 abdichtbar ist. Die Dichtung 20 ist konusförmig ausgebildet und dichtet das Gehäuse 19 gegenüber einer Antriebeswelle 21 ab. Mittels einer Vakuumpumpe 22 kann das Innere des Gehäuses 19 im abgedichteten Zustand evakuiert werden, wodurch Strömungsverluste reduziert werden. Neben der erläuterten Beschleunigung des Rotors 14 des Schwungradspeichers 13 kann dieser zusätzlich mechanisch über die Antriebswelle 21 beschleunigt werden. Der Schwungradspeicher 13 wird über eine Reibungskupplung 23 selektiv mit einer Antriebswelle 25 des automatischen Getriebes 3 verbunden. Während eines Bremsvorgangs kann der Rotor 14 über die schaltbare Reibungskupplung 23 mechanisch über die Antriebswelle 25 des automatischen Getriebes 3 mit der Antriebswelle 4 der ersten Achse 7 gekoppelt werden, wodurch die in das Gehäuse 19 des Schwungradspeichers 13 mündende Antriebswelle 21 beschleunigt wird. Zwischen der Reibungskupplung 23 und der Antriebswelle 21 ist eine Übersetzung 24 vorgesehen. Beim Einleiten eines Bremsvorgangs wird die Reibungskupplung 23 geschlossen, wodurch die Antriebswelle 21 und damit der Rotor 14 des Schwungradspeichers 13 beschleunigt werden. Die kinetische Energie der Räder 5, 6 der ersten Achse 7 wird auf diese Weise mechanisch in kinetische Energie des Schwungradspeichers 13 umgewandelt. Der Rotor 14 wird somit bei einem Bremsvorgang einerseits durch generatorischen Betrieb der elektrischen Maschinen 11, 12 der zweiten Achse und mechanisch durch die Antriebeswelle 4 angetrieben. Dadurch kann dem Rotor 14 ein größerer Anteil an Bremsenergie zugeführt werden im Vergleich zu einem Hybridfahrzeug, bei dem lediglich die Bremsenergie einer Achse verwendet wird.

In Fig. 2 ist der beschriebene Bremsvorgang über der Zeit dargestellt, wobei die Fahrzeuggeschwindigkeit, die Motordrehzahl und die Rotordrehzahl (vor der Übersetzung) qualitativ zu sehen sind. Man erkennt, dass die Fahrzeuggeschwindigkeit näherungsweise konstant reduziert wird. Am Anfang des Bremsvorgangs wird das automatische Getriebe 3 im sechsten Gang angetrieben, die Motordrehzahl ist zu Beginn höher als die Drehzahl des Rotors. Eine Drehzahldifferenz wird durch Schlupf an der Reibungskupplung 23 ausgeglichen, die sich dadurch erwärmt. Reibungswärme wird über einen Wärmetauscher abgeführt, wobei die Kupplung 23 in einem Ölbad läuft, das mit einem Kühlwasserkreislauf des Verbrennungsmotors 2 gekoppelt ist.

In Fig. 2 erkennt man, dass die Rotordrehzahl während des Bremsvorgangs ansteigt. Wenn die Motordrehzahl und die Rotordrehzahl (vor der Übersetzung) gleich sind, kann der Rotor nicht weiter beschleunigt werden. Dann schaltet das automatische Getriebe 3 in einen kleineren Gang, d. h. vom sechsten Gang in den fünften Gang, wodurch die Drehzahl der Antriebswelle 25 an der Eingangsseite der Reibungskupplung 23 erhöht wird. In diesem Zustand wird der Rotor 14 weiter beschleunigt. Analog wird stufenweise in kleinere Gänge geschaltet, bis der Rotor im ersten Gang nicht weiter beschleunigt werden kann. Diese Schaltvorgänge des automatischen Getriebes 3 werden automatisch von einem Steuergerät ausgelöst. In diesem Zustand dreht der Rotor 14 des Schwungradspeichers 13 mit sehr hoher Drehzahl. Um den Energieverlust durch Reibungseffekte zu minimieren, wird das Gehäuse 19 des Schwungradspeichers 13 mittels der Dichtung 20 abgedichtet, durch die Vakuumpumpe 22 wird das Innere des Gehäuses 19 evakuiert, so dass die als kinetische Energie in dem Rotor 14 gespeicherte Energie für eine gewisse Zeit aufrechterhalten werden kann. In diesem Zustand ist die Reibungskupplung 23 wieder geöffnet. Ebenso ist eine interne Kupplung 26 im Inneren des Schwungradspeichers 13 geöffnet, die bewirkt, das nicht benötigte Komponenten nicht angetrieben werden.

Während eines Beschleungigungsvorgangs kann die in dem Rotor 14 gespeicherte kinetische Energie genutzt werden. In diesem Betriebszustand wird die dritte elektrische Maschine 18, die den Rotor 14 und den Stator 15 umfasst, als Generator betrieben, wodurch der Rotor 14 abgebremst wird. Durch den generatorischen Betrieb wird elektrischer Strom erzeugt, der über die Leitung 17 und die Leistungselektronik 16 den elektrischen Maschinen 11, 12 zugeführt wird. Dadurch werden die Räder 8, 9 der zweiten Achse beschleunigt. Diese Beschleunigung durch elektrische Energie wirkt zusätzlich zu dem Drehmoment, das durch den Verbrennungsmotor 2 erzeugt und über das automatische Getriebe 3 und die Antriebswelle 4 an die erste Achse 7 abgegeben wird.

## Patentansprüche

1. Hybridfahrzeug, umfassend einen Verbrennungsmotor (2) mit einer Antriebswelle (4) zum Antreiben der Räder (5, 6) wenigstens einer Achse (7), wenigstens einer elektrischen Maschine (11, 12) zum Antreiben der Räder dieser oder wenigstens einer weiteren Achse (10), wobei die wenigstens eine elektrische Maschine (11, 12) bei einem Bremsvorgang als Generator und bei einem Beschleunigungsvorgang als Motor betreibbar ist, sowie eine mit der wenigstens einen elektrischen Maschine (11, 12) gekoppelte weitere elektrische Maschine (18) mit einem einen Rotor (14) aufweisenden Schwungradspeicher (13), der bei einem Bremsvorgang aufladbar und bei einem Beschleunigungsvorgang entladbar ist, wobei der Rotor (14) über wenigstens eine schaltbare Kupplung (23) mechanisch mit der Antriebswelle (4) der wenigstens einen vom Verbrennungsmotor antreibbaren Achse (7) koppelbar ist,
**dadurch gekennzeichnet,**
**dass** der Schwungradspeicher (13) über die als Reibungskupplung ausgebildete schaltbare Kupplung (23) selektiv mit einer Antriebswelle (25) eines automatischen Getriebes (3) verbindbar ist.

2. Hybridfahrzeug nach Anspruch 1,
**dadurch gekennzeichnet,**
**dass** der Schwungradspeicher (13) in einem abgedichteten oder abdichtbaren Gehäuse (19) angeordnet ist.

3. Hybridfahrzeug nach Anspruch 2,
**dadurch gekennzeichnet,**
**dass** das das Schwungrad aufnehmende Gehäuse (19) mittels einer Vakuumpumpe (21) evakuierbar ist.

4. Hybridfahrzeug nach einem der vorangehenden Ansprüche,
**dadurch gekennzeichnet,**
**dass** der Schwungradspeicher (13) eine interne Kupplung (26) umfasst.

5. Hybridfahrzeug nach Anspruch 4,
**dadurch gekennzeichnet,**
**dass** eine in das Gehäuse (13) des Schwungrads mündende Antriebswelle (21) mittels einer vorzugsweise konusförmigen Dichtung (20) abdichtbar ist.

6. Hybridfahrzeug nach einem der vorangehenden Ansprüche,
**dadurch gekennzeichnet,**
**dass** es eine Steuerungseinrichtung für das Getriebe (3) zur Anpassung der Motordrehzahl bei einem Bremsvorgang aufweist.

7. Hybridfahrzeug nach einem der vorangehenden Ansprüche,
**dadurch gekennzeichnet,**
**dass** die weitere elektrische Maschine (18) den Rotor (14) und einen Stator (15) umfasst, wobei entweder der Rotor (14) oder der Stator (15) Permanentmagnete aufweist.

8. Hybridfahrzeug nach einem der vorangehenden Ansprüche,
**dadurch gekennzeichnet,**
**dass** die schaltbare Reibungskupplung (23) mit einem Antiblockiersystem ausgerüstet ist.

9. Hybridfahrzeug nach einem der vorangehenden Ansprüche,
**dadurch gekennzeichnet,**
**dass** es einen Energiewandler umfasst, um bei einem Bremsvorgang kinetische Energie der mit dem Verbrennungsmotor (2) gekoppelten Antriebswelle (4) in pneumatische, hydraulische oder elektrische Energie umzuwandeln und dem Schwungradspeicher (13) zuzuführen.

10. Hybridfahrzeug nach Anspruch 9,
**dadurch gekennzeichnet,**
**dass** bei einem pneumatische Energie erzeugenden Energiewandler eine mit dem Schwungradspeicher (13) gekoppelte Turbine vorgesehen ist.

11. Hybridfahrzeug nach einem der vorangehenden Ansprüche,
**dadurch gekennzeichnet,**
**dass** die Reibungskupplung (23) mit einem Wärmetauscher gekoppelt ist, insbesondere mit einem Öl/Kühlwasser-Wärmetauscher.

## Claims

1. Hybrid vehicle, comprising a combustion engine (2) with a drive shaft (4) for driving the wheels (5, 6) of at least one axis (7), at least one electrical machine (11, 12) for driving the wheels of the latter or at least of a further axis (10), wherein the at least one electrical machine (11, 12) can be operated during a braking process as a generator and during an acceleration process as a motor, as well as a further electrical machine (18) coupled to the at least one electrical machine (11, 12) with a flywheel store (13) which has a rotor (14), which flywheel store is capable of being charged during a braking process and discharged during an acceleration process, wherein the rotor (14) can be coupled mechanically by means of at least one shiftable clutch (23) to the drive shaft (4) of the at least one axis (7) drivable by the combustion engine,
**characterised in that**
the flywheel store (13) can be connected selectively via the shiftable clutch (23) designed as a friction clutch to a drive shaft (25) of an automatic gearing (3).

2. Hybrid vehicle according to claim 1,
**characterised in that**
the flywheel store (13) is arranged in a sealed or sealable housing (19).

3. Hybrid vehicle according to claim 2,
**characterised in that**
the housing (19) mounting the flywheel can be evacuated by means of a vacuum pump (21).

4. Hybrid vehicle according to any of the preceding claims,
**characterised in that**
the flywheel store (13) comprises an internal clutch (26).

5. Hybrid vehicle according to claim 4,
**characterised in that**
a drive shaft (21) opening into the housing (13) of the flywheel can be sealed by means of a preferably conical seal (20).

6. Hybrid vehicle according to any of the preceding claims,
**characterised in that**
it has a control device for the gearing (3) for adjusting the motor speed during a braking process.

7. Hybrid vehicle according to any of the preceding claims,
**characterised in that**
the additional electrical machine (18) comprises the rotor (14) and a stator (15), wherein either the rotor (14) or the stator (15) has permanent magnets.

8. Hybrid vehicle according to any of the preceding claims,
**characterised in that**
the shiftable friction clutch (23) is fitted with an anti-blocking system.

9. Hybrid vehicle according to any of the preceding claims,
**characterised in that**
it comprises an energy converter, in order during a braking process to convert kinetic energy of the drive shaft (4) coupled to the combustion engine (2) into pneumatic, hydraulic or electric energy and supply it to the flywheel store (13).

10. Hybrid vehicle according to claim 9,
**characterised in that**
with an energy converter generating pneumatic energy a turbine coupled to the flywheel store (13) is provided.

11. Hybrid vehicle according to any of the preceding claims,
**characterised in that**
the friction clutch (23) is coupled to a heat exchanger, in particular an oil/cooling water heat exchanger.

## Revendications

1. Véhicule hybride, comprenant un moteur à combustion interne (2) avec un arbre d'entraînement (4) pour l'entraînement des roues (5, 6) d'au moins un axe (7), au moins une machine électrique (11, 12) pour l'entraînement des roues de cet axe ou d'au moins un autre axe (10), dans lequel l'au moins une machine électrique (11, 12) peut fonctionner lors d'une opération de freinage en tant que générateur et lors d'une opération d'accélération en tant que moteur, ainsi qu'une autre machine électrique (18) couplée avec l'au moins une machine électrique (11, 12) avec un accumulateur à volant d'inertie (13) présentant un rotor (14), lequel accumulateur à volant d'inertie est chargeable lors d'une opération de freinage et déchargeable lors d'une opération d'accélération, dans lequel le rotor (14) peut être couplé mécaniquement avec l'arbre d'entraînement (4) de l'au moins un axe (7) pouvant être entraîné par le moteur à combustion interne par le biais d'au moins un embrayage commutable (23),
**caractérisé en ce**
**que** l'accumulateur à volant d'inertie (13) peut être relié de manière sélective à un arbre d'entraînement (25) d'une transmission automatique (3) par le biais de l'embrayage commutable (23) réalisé en tant qu'embrayage à friction.

2. Véhicule hybride selon la revendication 1,
**caractérisé en ce**
**que** l'accumulateur à volant d'inertie (13) est agencé dans un boîtier (19) étanché ou pouvant être étanché.

3. Véhicule hybride selon la revendication 2,
**caractérisé en ce**
**que** le boîtier (19) recevant le volant d'inertie peut être évacué au moyen d'une pompe à vide (21).

4. Véhicule hybride selon l'une quelconque des revendications précédentes,
**caractérisé en ce**
**que** l'accumulateur à volant d'inertie (13) comprend un embrayage interne (26).

5. Véhicule hybride selon la revendication 4,
**caractérisé en ce**
**qu'**un arbre d'entraînement (21) débouchant dans le boîtier (13) du volant d'inertie peut être étanché au moyen d'un joint d'étanchéité (20) de préférence conique.

6. Véhicule hybride selon l'une quelconque des revendications précédentes,
**caractérisé en ce**
**qu'**il présente un dispositif de commande pour la transmission (3) pour l'adaptation de la vitesse du moteur lors d'une opération de freinage.

7. Véhicule hybride selon l'une quelconque des revendications précédentes,
**caractérisé en ce**
**que** l'autre machine électrique (18) comprend le rotor (14) et un stator (15), dans lequel soit le rotor (14) soit le stator (15) présente des aimants permanents.

8. Véhicule hybride selon l'une quelconque des revendications précédentes,
**caractérisé en ce**
**que** l'embrayage à friction commutable (23) est équipé d'un système antiblocage.

9. Véhicule hybride selon l'une quelconque des revendications précédentes,
**caractérisé en ce**
**qu'**il comprend un convertisseur d'énergie pour convertir lors d'une opération de freinage l'énergie cinétique de l'arbre d'entraînement (4) couplé avec le moteur de combustion interne (2) en énergie pneumatique, hydraulique ou électrique et l'amener à l'accumulateur à volant d'inertie (13).

10. Véhicule hybride selon la revendication 9,
**caractérisé en ce**
**que** dans le cas d'un convertisseur d'énergie générant une énergie pneumatique, une turbine couplée avec l'accumulateur à volant d'inertie (13) est prévue.

11. Véhicule hybride selon l'une quelconque des revendications précédentes,
**caractérisé en ce**
**que** l'embrayage à friction (23) est couplé avec un échangeur de chaleur, en particulier avec un échangeur de chaleur huile/eau de refroidissement.
